# EUROPEAN PATENT SPECIFICATION

(11) **EP 3 875 753 B1**
(45) Date of publication and mention of the grant of the patent: **24.08.2022**
(21) Application number: 20161006.0
(22) Date of filing: 04.03.2020
(51) Int. Cl.: F03D 13/10, F03D 1/06

(54) **A WIND TURBINE BLADE INSTALLATION METHOD**
VERFAHREN ZUR MONTAGE EINER WINDTURBINE
PROCÉDÉ D'INSTALLATION D'AUBE D'ÉOLIENNE

(43) Date of publication of application: 08.09.2021
(73) Proprietor: Vestas Wind Systems A/S, 8200 Aarhus N (DK)
(72) Inventor: BOTWRIGHT, Adrian, 8471 Sabro (DK)
(74) Representative: Vestas Patents Department

(56) References cited:
- WO-A1-2020/037018
- US-A1- 2010 028 152
- US-A1- 2017 045 030
- US-A1- 2019 017 495
- US-B2- 9 651 021
- US-B2- 9 669 497

## Description

### TECHNICAL FIELD

The present invention relates to a method for installation of a blade of a horizontal axis wind turbine, and combination of a blade guide device, a nacelle for a horizontal axis wind turbine, and a rotor hub mounted to the nacelle.

### BACKGROUND

A horizontal axis wind turbine typically comprises a tower supporting a nacelle to which a rotor is mounted. The rotor comprises one or more wind turbine blades which extend radially from a central hub.

There are different known ways of installing blades to a horizontal axis wind turbine. Blades may be installed in an installation process of a wind turbine, or a wind turbine farm. One or more blades may also be installed in a service process of a wind turbine. For example, a blade of a wind turbine may be removed, and replaced by another blade, or the blade may be reinstalled after service or repair.

In some methods, the blades are mounted to the hub on ground level, and the assembled rotor, with the hub and the blades, is lifted with a crane to the nacelle, at the top of the tower of the wind turbine, and mounted to it. In other methods, the blades are lifted individually one after the other with a crane to the hub, which is previously mounted to the nacelle at the top of the tower of the wind turbine. In such individual blade mounting methods the hub may be rotated between each blade installation so as to accommodate for the mounting of the next blade. For example, on three bladed wind turbines, the hub is rotated 120 degrees between each blade installation for the installation to take place at the same position of the hub.

For individual mounting of blades, different methods can be used. One is vertical blade installation, where the blade is oriented in a vertical direction when it is brought into a mating position with the hub. Vertical blade installation is sometimes known as installation in a six-o'clock position. Another individual blade installation method is horizontal blade installation, where the blade is oriented substantially horizontally when it is brought into a mating position with the hub. Horizontal blade installation is sometimes known as installation in a three-o'clock position. Horizontal blade installation may include other positions close to the three o'clock position in which the blade being installed extends laterally or predominantly laterally away from the hub. For the purposes of the present disclosure a three-o'clock blade installation position of the hub may include positions nearby a three-o'clock position and in which the installed blade extends predominantly laterally away from the hub.

With the present trend towards increasing sizes of wind turbines and their blades, it is becoming more important to control the orientation of the blade while it is moved towards the hub. The ability to control the blade during installation is dependent on the wind speed as well as oscillation of the tower as well as the crane. For orientation control it is known to use, besides a lifting wire to the crane, control wires or tag lines. Nevertheless, there is a need for a safe installation process prevents installation when wind speeds, or wind gust speeds, are above a limit.

EP2538073 discloses a horizontal blade installation method comprising providing a blade guide device mounted to the tower, to the nacelle or to the hub, and, while the blade is lifted towards the hub, bringing an external surface of the blade and the blade guide device into contact with each other. Thereafter, the blade is brought into a mounting position in which it is fastened to the hub. The blade guide device comprises two rollers which are separated vertically in relation to the longitudinal axis of the blade, to guide the blade root vertically and horizontally. Thereby, the rollers may in a "pinch-like" manner restrict the movement of the blade root in a vertical direction. Alternative, vertical methods of blade exchange or attachment are taught in US20190017495A1, US9651021B2 and US9669497B2.

However, it would be beneficial with a blade installation method which further improves the control of the blade orientation. This would allow blades to be installed in higher wind speeds and/or tower oscillation than those in which known installation methods are allowed.

### SUMMARY

It is an object of the invention to increase the tolerance of horizontal blade installation methods to wind and/or tower oscillation. It is also an object of the invention to provide, for blade installation, an improved control of the blade, in particular of the orientation of the blade.

One or more of the objects are reached with a method according to claim 1. Thus, the invention provides a method for installation of a blade of a horizontal axis wind turbine. In particular, the method is for horizontal blade installation. The method comprising providing a nacelle for the wind turbine, and a rotor hub mounted to the nacelle. A blade guide device is mounted to the nacelle. The weight of the blade is supported with lifting means. In particular, the entire weight of the blade is supported with lifting means. The blade is moved towards the hub by means of the lifting means, while the entire weight of the blade is supported by the lifting means. While the entire weight of the blade is supported by the lifting means, the blade and the blade guide device are brought into contact with each other. After the blade and the blade guide device have been brought into contact with each other, the weight of the blade is supported by both the lifting means and the blade guide device. With the blade and the blade guide device in contact with each other, the blade is brought into a mounting position in which it is fastened to the hub. Further optional features are defined in subclaims 2-12.

The lifting means may comprise one or more cranes. The lifting means may lift the blade towards the hub. The step of supporting the weight of the blade with lifting means may comprise supporting the entire weight of the blade with lifting means. The lifting means may be separate from the wind turbine, such as on a vessel or on a vehicle. However in some embodiments, the lifting means could be mounted on or in the wind turbine.

The step of bringing the blade and the blade guide device into contact with each other, may comprise bringing an external surface of the blade and the blade guide device into contact with each other. This means that the blade will not need any special devices to engage with the blade guide device. The external surface of the blade may be an outer surface which, in the mounted condition of the blade, can be seen by an external observer, and which is in contact with the air surrounding the blade, as opposed to any surface that is, in the mounted condition of the blade, in contact with, or facing, other wind turbine parts, or internal surfaces of the blade.

The blade is in a substantially horizontal orientation while the blade and the blade guide device are brought into contact with each other. The blade is brought into the mounting position, in which it is fastened to the hub, after the step of bringing the blade and the blade guide device into contact with each other.

The weight of the blade being supported by the lifting means and the blade guide device may involve the blade resting on the blade guide device by gravity. The blade may be secured to the blade guide device by gravity. The distribution of the weight of the blade between the lifting means and the blade guide device may vary from one embodiment to another. Preferably, at least 1%, more preferably at least 2%, even more preferably at least 5%, yet even more preferably at least 10%, of the blade weight is supported by the blade guide device. The rest of the blade weight may be supported by the lifting means. Preferably, at least 50%, more preferably at least 70%, even more preferably at least 80% of the blade weight is supported by the lifting means. In some embodiments, 2-20% of the blade weight may be supported by the blade guide device, while 80-98%, or the rest, of the blade weight may be supported by the lifting means.

Fastening the blade to the hub may comprise fastening a blade root of the blade to the hub. The blade guide device may guide the blade, secured by gravity or otherwise, to the hub while the blade is secured by gravity or otherwise to the blade guide device. As exemplified below, when guided to the hub, at least a blade contact device of the blade guide device may move with the blade. Thereby, the blade can be brought into the mounting position while in contact with the blade guide device, so that the blade root is guided to its correct position with a large degree of precision.

The invention allows for securing the blade by gravity to the blade guide device. Thereby sliding of the blade in the blade guide device may be avoided. This, in combination with the blade guide device being mounted to the nacelle, to which the hub is mounted, provides for a particularly rigid and stable support for the blade in relation to the hub. With the blade guide device being mounted to the nacelle, both the weight of the blade guide device and any additional weight of a blade resting on the blade guide device are carried by the nacelle. In other words, when the blade guide device is mounted to the nacelle, the weight of the blade guide device and all loads on it are carried by the nacelle. Thereby an improved control of the orientation of the blade is provided. This allows for the dependence on the weather to be reduced. In particular, blade installation may be allowed in wind speeds and/or tower oscillations induced by wind, wave and/or current that are higher than those in which known installation methods are allowed. This, in turn, makes the timing of the blade installation more predictable. This provides an important advantage, since equipment for blade installation, such as a crane, may generate costs which are proportional to the duration in which it is present at the installation site. Furthermore, such equipment may only be available in limited periods of time, so if the installation has not been possible within this limited period, then the installation may be substantially delayed. Therefore, since the invention allows a reduction of the risk of waiting for the wind speed to be reduced, installation costs may be reduced.

In addition, by mounting the blade guide device to the nacelle, the method is easily adapted to installation processes for new wind turbines, as well as service processes on wind turbines. Further, the nacelle mounting of the blade guide device secures that any movement of the hub is followed by the blade guide device. This may make the blade installation less dependent on the weather and water condition (for offshore installation). For example, the blade installation may be allowed despite a risk of tower oscillations due to conditions at the site of the wind turbine. The tower oscillations may be wave induced tower oscillations in an offshore wind turbine.

It should be noted that the use of the blade guide device may be done selectively depending on the installation conditions, in particular the weather or wind conditions. Thus, if the wind speeds are relatively low, a blade installation may be carried out without mounting a blade guide device to the nacelle. The method may comprise the step of assessing installation conditions, comprising one or more of wind, waves, temperature, and/or the time of day. Based on the assessment, it may be determined whether the blade guide device should be used, and particularly if the blade guide device should be mounted to the nacelle before the nacelle is mounted on the tower of the wind turbine.

The blade extends longitudinally between a blade root and a blade tip. The support of the blade by the lifting means is done by means of an engagement device of the lifting means. The engagement device may be in any suitable form, e.g. a blade gripper or blade gripping device. The engagement device engages the blade in a region between the blade root and the blade tip. For example, the engagement device may engage the blade at a shoulder of the blade or near the centre of gravity of the blade. A region of the contact of the blade guide device with the blade is closer to the blade root than to the region of the engagement of the engagement device. For example, the blade guide device may contact the blade at the blade root. The blade may have a circular cross-section at the blade root, and the blade guide device may have one or more blade contact surfaces with corresponding, part-circular cross-sections. A part-circular cross-section with similar inner diameter as the blade root end and a soft liner in the interphase between the blade guide device and the blade root is preferred to accommodate for swaying in the blade tip as well as this allows for a very low contact pressure between the blade root and the blade guide device so the risk of deformation or damage to the blade root is reduced.

Preferably the support of the lifting means is such that, while the weight of the blade is supported by the lifting means and the blade guide device, if the blade would be lifted away from the blade guide device, the blade root would be lower in relation to the engagement device, compared to the location of the blade root in relation to the engagement device when the weight of the blade is supported by the lifting means and the blade guide device. The angle of a longitudinal extension of the blade, if the blade is supported by the lifting means only, compared to the blade longitudinal extension angle when the blade is supported by the blade guide device and the lifting means, may determine the pressure of the blade against the blade guide means when the blade is supported by the lifting means and the blade guide device.

In some embodiments, the method comprises, after bringing the blade and the blade guide device into contact with each other, lowering the engagement device. Thereby, before bringing the blade and the blade guide device into contact with each other, the blade root may be lower in relation to the engagement device, compared to the location of the blade root in relation to the engagement device when the weight of the blade is supported by the lifting means and the blade guide device. As the blade and the blade guide device are brought into contact with each other, the engagement device may be lowered. Thereby the pressure on the blade guide device from the blade may be increased. This allows for use of gravity to secure the blade root to the blade guide device while still connecting the blade to the hub with the blade oriented horizontally.

For example, the blade longitudinal extension may be substantially horizontal, if the blade is supported by the lifting means only, whereas the blade may be pointing upwards in a direction towards the hub when supported by the lifting means as well as the blade guide device. Alternatively, the blade longitudinal extension may be pointing downwards in a direction towards the hub, if the blade is supported by the lifting means only, whereas the blade may be substantially horizontal when supported by the lifting means as well as the blade guide device.

During the step of supporting the weight of the blade with the lifting means, the engagement device may be suspended in one or more wires of the lifting means. In some embodiments, the method further comprising moving a connection between the engagement device and the one or more wires, in a direction away from the blade root. For example, the connection may involve a bracket to be engaged by a crane hook of the lifting means. The bracket may be movable, in relation to remainder of the blade engagement device, along the blade longitudinal extension. Thereby, when the blade is supported by the blade guide device and the lifting means, pressure by the blade on the blade guide device may be increased by moving said connection away from the blade root. Thereby, a part of the blade weight may be shifted to the blade guide device. In another embodiment, a weight is connected to the blade or the lifting means, and a part of the weight of the blade is shifted from the lifting means to the blade guide device by moving the weight in the direction of the blade root.

Preferably, the step of bringing the blade and the blade guide device into contact with each other comprises bringing the blade and a blade contact device of the blade guide device into contact with each other. Thereby, preferably the step of bringing the blade into the mounting position comprises moving the blade contact device towards the hub. Thereby, the blade contact device may be moved in relation to a blade support device of the blade guide device. Thereby the blade support device may be stationary in relation to the nacelle. The blade contact device may be moved towards the hub by means of motion providing means. The motion providing means may be provided in any suitable form, e.g. as an electric motor, or a hydraulic actuator. When sliding connection between the blade contact device and the blade support device of the blade guide device are with no motor or actuator the motion providing means may be the motion of the lifting means in the direction of the hub.

Thereby the blade contact device may serve the blade to the hub. This may be allowed by a frictional connection between blade and blade contact device. The frictional connection may be provided by gravity. One or more blade contact surfaces of the blade contact device may be provided with a high friction material.

The blade may be suspended from a crane boom of the lifting means with one or more wires between the boom and the blade engagement device. When the blade contact device is moved towards the hub, the crane boom may be stationary. Thereby, the one or more wires may assume an angle from a vertical direction. However, this angle may be small enough to be acceptable. Thereby, the movement of the blade towards the hub may be simplified in that it does not require any control of the lifting means. Nevertheless, in some embodiments, when the blade contact device is moved towards the hub, the crane boom may follow this movement or the sliding connection between the blade contact device and the blade support device may be led by the movement of the crane boom.

As suggested, the step of bringing the blade and the blade guide device into contact with each other may comprise bringing the blade and a blade contact device of the blade guide device into contact with each other. Where the blade extends longitudinally between a blade root and a blade tip, the method may comprise moving, after bringing the blade and the blade guide device into contact with each other, the blade contact device of the blade guide device transversely to the blade longitudinal direction. The blade contact device may make one or more transversal movements which may be horizontal and/or vertical. Thereby a mounting arrangement of the blade to the hub may be accurately aligned. For example, the mounting arrangement may comprise threaded pins along the periphery of the blade root, adapted to engage holes along a mounting flange of the hub.

In some non-claimed examples the blade guide contact may be arranged to move with three degrees of freedom, along the longitudinal extension of the blade, along a vertical transverse direction and along a horizontal transverse direction. In some embodiments, movements along the longitudinal extension of the blade, and along the vertical transverse direction, are done by moving the blade contact device in relation to a blade support device of the blade guide device. In some embodiments, movements along the horizontal transverse direction, are done by moving the blade contact device as well as the blade support device.

In some non-claimed examples, the blade contact device may be rotated around a substantially vertical axis. Alternatively or in addition, the blade contact device may be softer at a distance from a vertical plane including a centre axis of a cylindrical blade root of the blade, than the blade contact device is closer to said vertical plane. This may allow for a slight twisting of the blade root during the installation.

In some embodiments, the method comprises, during the step of bringing the blade and the blade guide device into contact with each other, guiding, by means of a contact guiding arrangement of the blade guide device, the blade into contact with one or more blade contact surfaces of the blade guide device. This may facilitate the step of bringing the blade and the blade guide device into contact with each other. The guiding arrangement may aid a landing of the blade in the blade guide device.

The method may comprise engaging, upon bringing the blade and the blade guide device into contact with each other, a locking device to further secure the blade to the blade guide device in addition to the securing provided by gravity when the blade guide device supports part of the weight of the blade. The locking device could comprise any suitable means to secure the blade, e.g. a clamping device, or a strap.

In some embodiments the method comprises, after fastening the blade to the hub, moving the blade guide device, while mounted to the nacelle, away from the hub. Thereby, the blade guide device may be moved out of a volume which would be swept by the hub while the hub rotates. Where more than one blade is to be mounted to the hub, moving the blade guide device away from said swept volume allows the hub to be rotated after the blade has been installed, to put the hub in a position for receiving a further blade. This embodiment of the method optionally further comprises putting the hub in the position for receiving the further blade followed by moving the blade guide device towards the hub ready to receive the further blade. Thereafter installing the further blade using the blade guide device.

In some embodiments, the step of bringing the blade and the blade guide device into contact with each other is done after mounting the nacelle on top of a tower of the wind turbine. Thereby, the method can be used not only for installation processes of new wind turbines, but also for service of wind turbines.

The method may comprise, after fastening the blade to the hub, dismounting the blade guide device from the nacelle, and moving the blade guide device down from the nacelle by means of hoisting means provided in or on the nacelle. Thereby, the blade guide device may be moved down outside of the wind turbine tower. The hoisting means may be a winch or a crane in or on the nacelle. The hoisting means may be temporarily or permanently installed in or on the nacelle.

Nevertheless, in alternative embodiments, the method may comprise, after fastening the blade to the hub, dismounting the blade guide device from the nacelle, and moving the blade guide device down from the nacelle by means of hoisting means provided separately from the wind turbine. Thereby the hoisting means may be, e.g. a sea vessel crane in the case of an offshore wind turbine, or a mobile crane in the case of an onshore wind turbine.

In some embodiments, the step of mounting the blade guide device to the nacelle is done before mounting the nacelle on top of a tower of the wind turbine. This may be particularly advantageous at an installation process of a new wind turbine. The blade guide device may be provided mounted onto the nacelle when the nacelle is lifted and mounted on top of the tower. It might be easier to mount the blade guide device to the nacelle before the latter is mounted onto the tower, than after the nacelle is mounted onto the tower.

In some embodiments, the blade installation is done while the wind turbine is shut down after having operated to produce power to a grid. Thereby, the blade installation may be done in a service operation on the wind turbine.

One or more non-claimed examples are also reached with a combination of a blade guide device, a nacelle for a horizontal axis wind turbine, and a rotor hub mounted to the nacelle, the blade guide device being mounted to the nacelle, the blade guide device being arranged to be in contact with a blade to be fastened to the hub, and to thereby support a part of the weight of the blade. The combination may be provided in non-claimed examples of the method described above.

The combination may comprise moving means for moving the blade guide device, while mounted to the nacelle, from a blade contact position, in which the blade guide device is at least partly located within a volume which would be swept by the hub while the hub rotates, to a retracted position in which the blade guide device is moved away from the swept volume. As suggested, where more than one blade is to be mounted to the hub, moving the blade guide device away from said swept volume allows the hub to be rotated after the blade has been installed, to put the hub in a position for receiving a further blade.

The non-claimed blade guide device may comprise a contact guiding arrangement, arranged to guide the blade into contact with one or more blade contact surfaces of the blade guide device.

### BRIEF DESCRIPTION OF THE DRAWINGS

Below examples of the invention will be described in detail with reference to the drawings, in which:
- Fig. 1 is a view of a wind turbine,
- Fig. 2 is a perspective view of a wind turbine rotor blade,
- Fig. 3 and fig. 4 are side views of a nacelle of the wind turbine in fig. 1, at a blade installation method according to an embodiment of the invention,
- Fig. 5 shows a step in the blade installation method, with the wind turbine and a jack-up sea vessel,
- Fig. 6 and fig. 7 show front views of the nacelle in fig. 3 and fig 4,
- Fig. 8 and fig. 9 show perspective views of a blade guide device,
- Fig. 10 shows a further front view of the nacelle in fig. 3 and fig 4, and
- Fig. 11 is a flow diagram showing steps in a method according to an embodiment of the invention.

### DETAILED DESCRIPTION OF EMBODIMENTS OF THE INVENTION

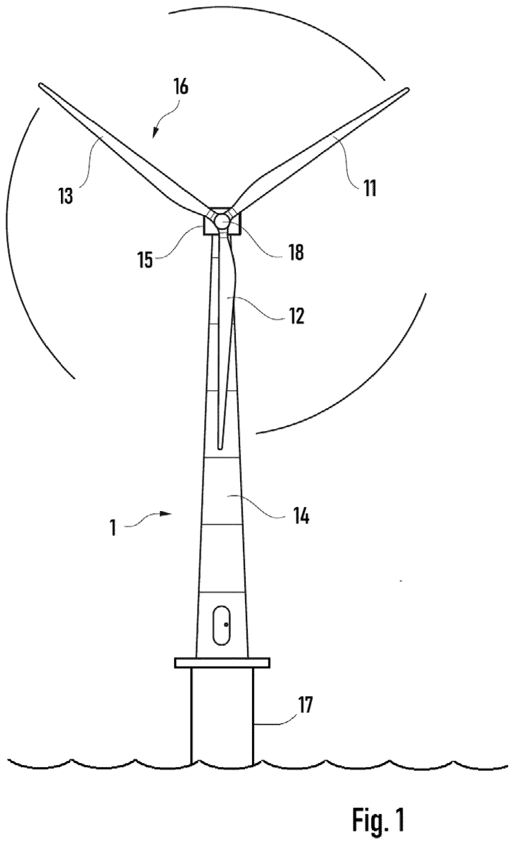

Fig. 1 shows a horizontal axis wind turbine 1. In this example, the wind turbine is an offshore wind turbine. However, the invention is equally applicable to an onshore wind turbine.

The wind turbine 1 comprises a tower 14 supporting a nacelle 15. A rotor 16 is mounted to the nacelle. The tower is supported by a foundation 17. In this example the foundation is a monopile foundation. In other embodiments, the foundation may be of another type, e.g. a jacket foundation, a floating foundation or an onshore foundation. The rotor 16 comprises a plurality of wind turbine blades 11, 12, 13 that extend radially from a central hub 18. In this example, the rotor 16 comprises three blades 11, 12, 13. The hub 18 is mounted to the nacelle 15.

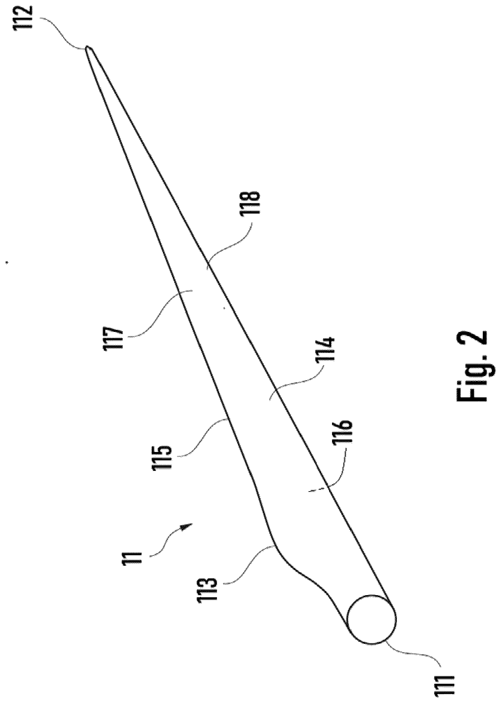

Fig. 2 is a view of one of the blades 11 of the wind turbine 1. The blade 11 extends from a root end 111 to a tip end 112 in a longitudinal 'spanwise' direction. The root end may be generally circular. The blade may be of any suitable length, e.g. in the interval 30-120 metres. The blade 11 may transition from a circular profile to an airfoil profile moving from the root end 111 of the blade 11 towards a shoulder 113 of the blade 11. The shoulder 113 may be the widest part of the blade 11. The blade 11 may have its maximum chord at the shoulder 113.

It should be noted that the proportions of the blade are provided for easy of understanding, and not necessarily representative of the shape of a wind turbine blade in practice.

The blade 18 extends between a leading edge 114 and a trailing edge 115 in a transverse 'chordwise' direction. The blade presents a pressure surface 116 on a pressure side of the blade 11 and a suction surface 117 on a suction side of the blade 11. The blade 11 comprises a shell 118. The shell may be formed primarily of fibre-reinforced composite FRC. The blade may comprise an internal structure. The internal structure may comprise two spar caps and one or more webs.

Embodiments of the invention provides a method for installation of a blade of a horizontal axis wind turbine. The blade installation may be done while the wind turbine is shut down after having operated to produce power to a grid. Thereby the blade installation may be a part of a service operation. Alternatively, the blade installation may be a part of an installation process of a new wind turbine. The method could be performed offshore. Alternatively, the method may be used for an onshore wind turbine.

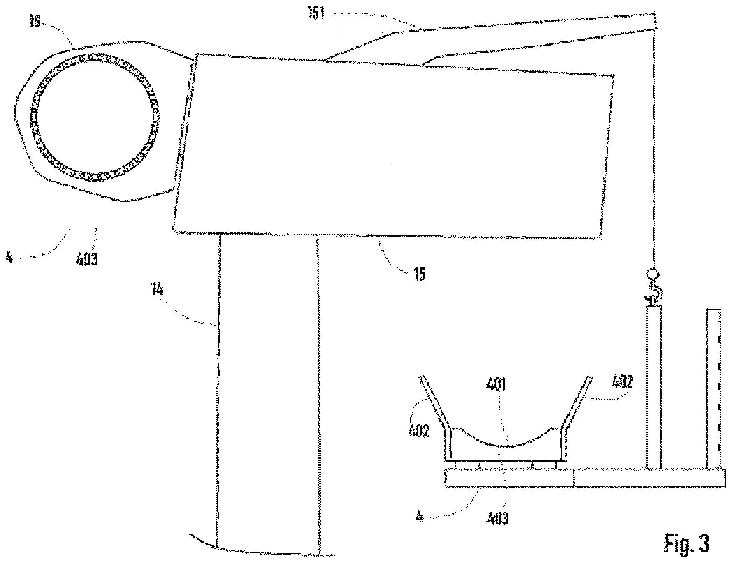

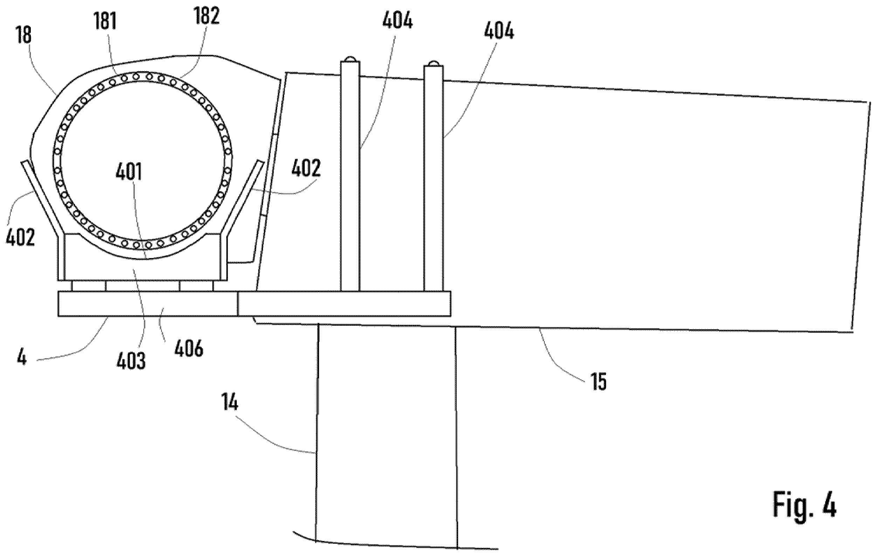

Reference is made to figs. 3 and 4 which show the hub 18 in a so-called three-o'clock position. The method may comprise mounting a blade guide device 4 to the nacelle 15. For this, the the blade guide device 4 may be moved up to the nacelle by means of hoisting means 151 provided in or on the nacelle. In the example in fig. 3, the hoisting means is a service crane permanently installed in the nacelle. The crane is arranged to reach outside of the nacelle through an opening in a cover of the nacelle, for example in the roof of the nacelle. The opening may be arranged to be covered by one or more hatches (not shown). More generally, the hoisting means 151 may be a crane or a winch, which is permanently or temporarily installed in or on the nacelle.

The blade guide device 4 may be lifted from a platform at the offshore foundation of the wind turbine, from a floating sea vessel, or from a seabed secured jack-up vessel. In case of an onshore wind turbine, the blade guide may be lifted from the ground, or from a vehicle.

After use, the blade guide may be lowered from the nacelle with the same hoisting means 151.

As suggested above, in some embodiments, the step of mounting the blade guide device 4 to the nacelle 15 may alternatively be done before mounting the nacelle (in this case together with the mounted blade guide device) on top of the tower 14 of the wind turbine 1.

As exemplified in fig 4, the blade guide device 4 may be arranged to be positioned on a side of the nacelle. For this, the blade guide device 4 may comprise one or more mounting elements 404 which are arranged to reach up to and onto the nacelle roof. Thereby, the blade guide device may be mounted to the nacelle by fastening the one or more mounting elements 404 to the nacelle roof. This simplifies the mounting procedure of the blade guide device. Thereby, access for staff, working with the blade guide device mounting, is required only to the nacelle roof.

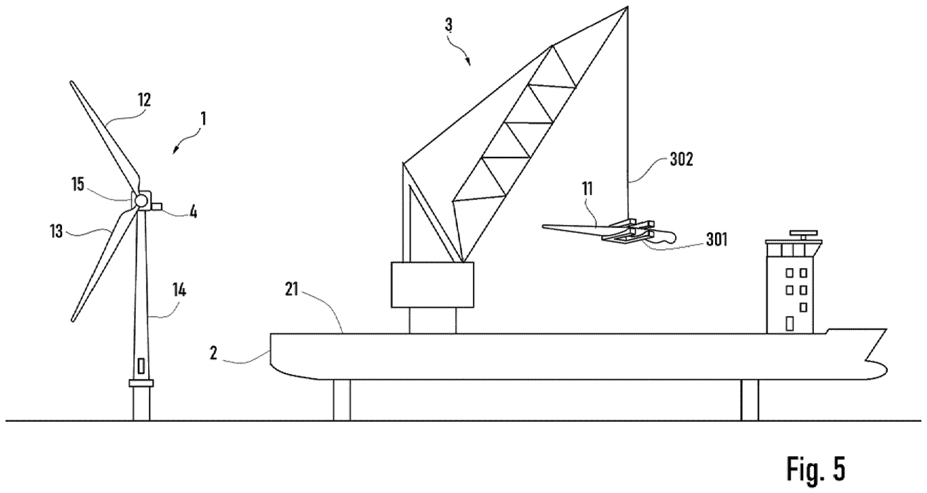

Reference is made also to fig. 5 which shows a blade 11 suspended from a lifting means 3 in the form of a crane and held in a substantially horizontal orientation. The method may comprise supporting the weight of a blade 11 with lifting means 3. The lifting means 3 may be a crane. The blade 11 may thereby be supported by the crane. The lifting means may be provided on a marine vessel. The vessel could be a jack-up ship 2, as exemplified in fig. 5. The support of the blade by the lifting means 3 may be done by means of an engagement device 301 of the lifting means. The engagement means 301 may be suspended in one or more wires 302 from a crane boom. The engagement device 301 may be a device arranged to grip the blade. The engagement device may engage the blade in a region between the blade root and the blade tip, e.g. at the shoulder of the blade.

The method may comprise moving the blade 11 towards the hub 18 by means of the lifting means 3, while the weight of the blade is supported by the lifting means. The method may comprise the lifting means 3 moving the blade 11 from a deck 21 of the vessel to towards the hub 18 by means of the lifting means 3. In some embodiments, the lifting means may be a mobile crane for installing the blade in an onshore wind turbine.

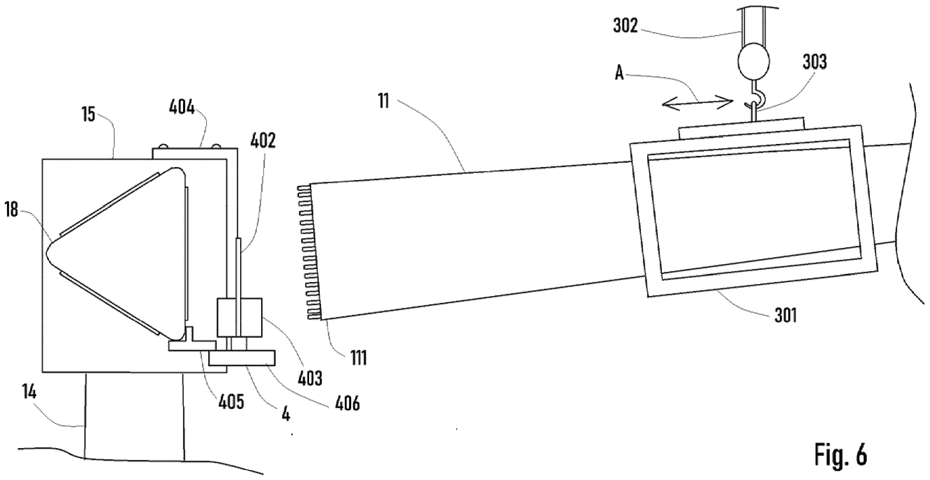

Reference is made also to fig. 6. The blade guide device 4 is arranged to be in contact with the blade 11 to be fastened to the hub 18. Thereby the blade guide device 4 may support a part of the weight of the blade. The blade guide device 4 may support the blade together with the lifting means 3.

The blade guide device may comprise a hub contact device 405. The hub contact device may be arranged to contact the hub. The hub contact device 405 may be braced against the hub 18. The hub contact device 405 may be arranged to contact the hub at a lower region of the hub. In some embodiments, the hub contact device 405 may exert a pressure upwards onto the hub. The hub contact device may secure a relative position between the blade guide device 4 and the hub 18. The hub contact device 405 may create a rigid connection between the blade guide device and the hub. Thereby the rigidity, and hence the weight, of the blade guide device may be kept relatively low.

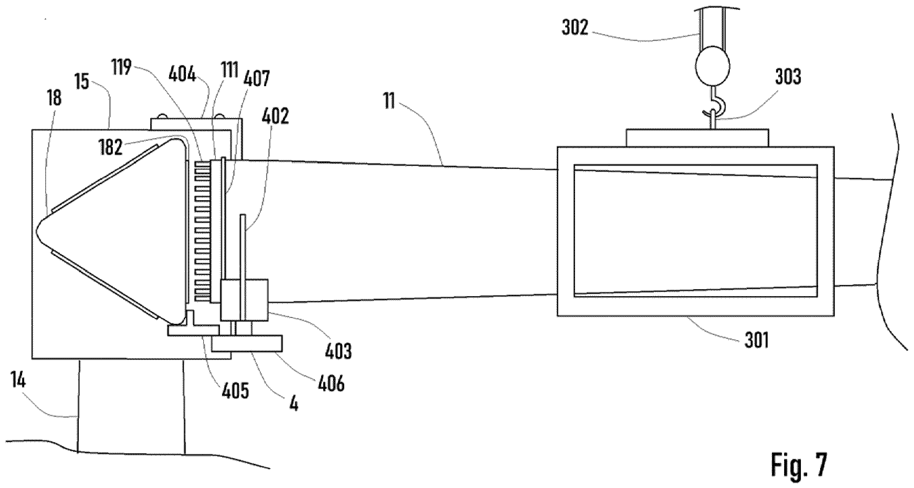

Reference is made also to fig. 7. The method comprises bringing, while the weight of the blade 11 is supported by the lifting means 3, the blade and the blade guide device 4 into contact with each other. After the blade 11 and the blade guide device 4 have been brought into contact with each other, the weight of the blade is supported by the lifting means 3 and the blade guide device 4. Thereby, the blade guide device support is at the blade root 111 of the blade 11.

As exemplified in fig. 4, the blade guide device 4 may comprise a blade contact device 403 arranged to be in contact with the blade 11. The blade contact device 403 may be supported by a blade support device 406. The blade support device may be arranged to be rigidly connected to the one or more mounting elements 404. In a preferred mode, the blade 11 may, while suspended from the lifting means 3, be docked with the blade guide device 4 such that the blade 11 is mainly supported by the lifting means 3 and partially supported by a blade contact device 403 of the blade guide device 4. In particular, the blade 11 is thereby partially supported at its root 111 by the blade guide device 4. The blade root 111 may thereafter be guided into position on the hub 18, while some of its weight is being carried by the blade guide device 4. In embodiments, the root region of the blade 11 may slide over a blade contact device 403 of the blade guide device 4 as it is brought into position at the hub 18. The fact of the blade 11 partially resting on the blade guide device 4 proximate the hub 18 stabilises the blade root during the last stage of the blade attachment process to the hub 18. Optionally, the step of guiding the blade 11 to the hub 18 may be assisted by movement of the blade guide device 4 towards the hub 18, notably while some of the blade's weight is being carried by the blade guide device 4. For this, the blade guide device 4 may move between a blade receiving position thereof and a blade mounting position thereof. A blade receiving position of the blade guide device 4 may be at a position away from the hub in relation to a blade mounting position thereof. Likewise, a blade mounting position of the blade guide device 4 may be at a position closer to the hub 18 in relation to a blade receiving position thereof. In embodiments, a blade mounting position of the blade guide 4 may be a position close to the hub 18 and inside a swept volume V of the hub 18 when it rotates. In embodiments, a blade receiving position of the blade guide 4 may be a position close to the hub 18 and outside a swept volume V of the hub 18 when it rotates. In embodiments, the blade 11 may engage non-slidably with a blade contact device 403 of the blade guide device 4. For example, the blade 11 may frictionally engage with a blade contact surface 401 of the blade contact device 403. The effect of the blade's weight acting on the blade contact device 403 thereby serves to immobilize the blade 11 on the blade guide 4. This immobilization effect due to gravity and friction is enough to ensure the blade root 111 will be drawn into its mounting position at the hub 18 when the blade guide 4 is moved from a blade receiving position thereof to a blade mounting position thereof with the blade 11 partially resting thereon and primarily supported by suspension from a lifting means 3. In alternative embodiments, the blade 11, once docked with the blade guide 4 may be held fast to it in another way e.g. using a clamping action of a clamping element such as a locking means 407. Such a locking means may for example grip the blade root 111 at an exterior portion of the blade root 111. Such a locking means 407 may for example contact the blade root 111 at an exterior portion of the blade root 111 such that it urges the blade root 111 downwards or partially downwards onto the blade contact device 403. Alternatively, such a locking means 407 may for example contact the blade root 111 at an exterior portion of the blade root 111 such that it urges the blade root 111 in a direction across or parallel to the blade contact device 403. A locking element 407 at the blade guide device 4 may include one or more locking elements such as clamping elements. A clamping element may preferably comprise a clamping arm movable between a released position and an engaged position. A clamping arm may include an actuator to move it between a released position and an engaged position and/or vice-versa. In one aspect, a locking element 407 may comprise clamping arms acting in opposition to each other.

The blade contact device 403 may present one or more blade contact surfaces 401. The blade root 11 may have a cylindrical cross-section. The blade contact device 403 may be arranged to accept the blade root diameter. In the example in fig. 4, the blade contact device 403 comprises a part circular contact surface 401. Alternatively, two or more blade contact surfaces may be formed on respective contact elements, e.g. in the form of plates.

As exemplified in fig. 4, the blade guide device may comprise a contact guiding arrangement 402. During the step of bringing the blade 11 and the blade guide device 4 into contact with each other, the blade may be guided by means of the contact guiding arrangement 402. As exemplified in fig. 4, the contact guiding arrangement 402 may comprise one or more, in this example two, guide pins or plates 402.

The engagement device 301 may be suspended from a lifting means via a lifting wire 302 such as a crane wire. To this end, there may be provided a connection 303 at the engagement device 301, for example in the form of a lifting point. A lifting point may comprise an associated coupling between the engagement device 301 and the one or more lifting wires 302 - e.g. via a crane hook on the lifting wire 302. In embodiments, the lifting point may be translatable in relation to the engagement means 301. In particular, in embodiments, the lifting point may be translatable in a spanwise direction of a blade 11 supported in the engagement means 301. In this way, the position of the lifting point in relation to the centre of gravity of a blade 11 supported in the engagement means 301 may be shifted. In turn, a shift in the relative position of the lifting point in relation to the centre of gravity may lead to a turning force exerted at the blade root 111. For example, when a blade 11 is held suspended in a roughly horizontal orientation, a shift in the position of the lifting point in a direction away from the blade root 111 may lead to a turning force tending to move the root 111 in a downwards direction. In this case, the corresponding effect will be to increase the downward force exerted at the blade root 111 if, during the shifting of the lifting point, the blade is maintained in its horizontal position, e.g. docked in a blade guide device 4 and resting partially on it. Similarly, when a blade 11 is held suspended in a roughly horizontal orientation, a shift in the position of the lifting point towards the blade root 111 may lead to a turning force tending to move the root 111 in an upwards direction. In this case, the corresponding effect will be to respectively decrease the downward force exerted at the blade root 111 if, during the shifting of the lifting point, the blade is maintained in its horizontal position, e.g. docked in a blade guide device 4 and resting partially on it. Hence, in order to increase the effect of stabilizing a blade 11 in a guide device 4 at a wind turbine nacelle the method may include shifting the position of the lifting point of the engagement means 301 in a direction away from the blade root 111. This may be carried out, for example by shifting the position of connection 303 of the engagement means 301 in a direction away from the blade root 111. It may be advantageous to perform such a step after docking a blade root 11 on a blade guide device 4 and prior to moving the blade root 111 into a mounting position thereof at the hub 18. As understood from fig. 7, when the blade is supported by the blade guide device 4 and the lifting means 3, the blade centre of gravity is between a region of contact between the blade guide device 4 and the connection 303 between the engagement device 301 and the one or more crane wires 302. For ensuring this, as illustrated in fig. 6, the method may comprise moving the connection 303, in a direction away from the blade root 111. This may be done before or after the blade has come into contact with the blade guide device 4. In an alternative arrangement, a translatable counterweight at the blade engagement means 301 may be moved in a spanwise direction in order to regulate the downward force of a horizontally suspended blade 11 at its root 111. For example, when a blade 11 is held suspended in a roughly horizontal orientation, a shift in the position of the counterweight in a direction towards the blade root 111 may lead to a turning force tending to move the root 111 in a downwards direction. In this case, the corresponding effect will be to increase the downward force exerted at the blade root 111 if, during the shifting of the counterweight, the blade is maintained in its horizontal position, e.g. docked in a blade guide device 4 and resting partially on it. Similarly, when a blade 11 is held suspended in a roughly horizontal orientation, a shift in the position of the counterweight away from the blade root 111 may lead to a turning force tending to move the root 111 in an upwards direction. In this case, the corresponding effect will be to respectively decrease the downward force exerted at the blade root 111 if, during the shifting of the counterweight, the blade is maintained in its horizontal position, e.g. docked in a blade guide device 4 and resting partially on it. Hence, in order to increase the effect of stabilizing a blade 11 in a guide device 4 at a wind turbine nacelle the method may include shifting the position of a counterweight of the engagement means 301 in a direction away from the blade root 111. It may be advantageous to perform such a step after docking a blade root 11 on a blade guide device 4 and prior to moving the blade root 111 into a mounting position thereof at the hub 18.

At the connection 303 a hook of the lifting means may be engaged with a bracket of the engagement device 301. The engagement device 301 may comprise an actuator for moving the connection 303 along the longitudinal extension of the blade 11, as exemplified with the double arrow A in fig. 6.

In the example in fig. 6, the connection 303 is moved away from the blade root 111 before the blade has made contact with the blade guide device 4. After bringing the blade 11 and the blade guide device 4 into contact with each other, the engagement device 301 may be lowered. Alternatively, the connection 303 is moved away from the blade root 111 upon bringing the blade and the blade guide device 4 into contact with each other. Further alternatively, a weight (not shown) on the engagement device 301 may be shifted in the direction towards the root end of the blade to shift a part of the weight of the blade from the lifting means to the blade guide device.

It is understood that while the weight of the blade 11 is supported by the lifting means and the blade guide device 4, as exemplified in fig. 7, the support of the lifting means 3 is such that, if the blade would be lifted away from the blade guide device 4 using the lifting means 3, the blade root 111 would be, as exemplified in fig. 6, lower in relation to the engagement device 301, compared to the location of the blade root in relation to the engagement device when the weight of the blade is supported by the lifting means and the blade guide device.

As exemplified in fig. 7, the method may comprise engaging, upon bringing the blade 11 and the blade guide device 4 into contact with each other, a locking device 407 to further secure the blade to the blade guide device. The locking device may comprise a strap 407, or any other suitable securing means.

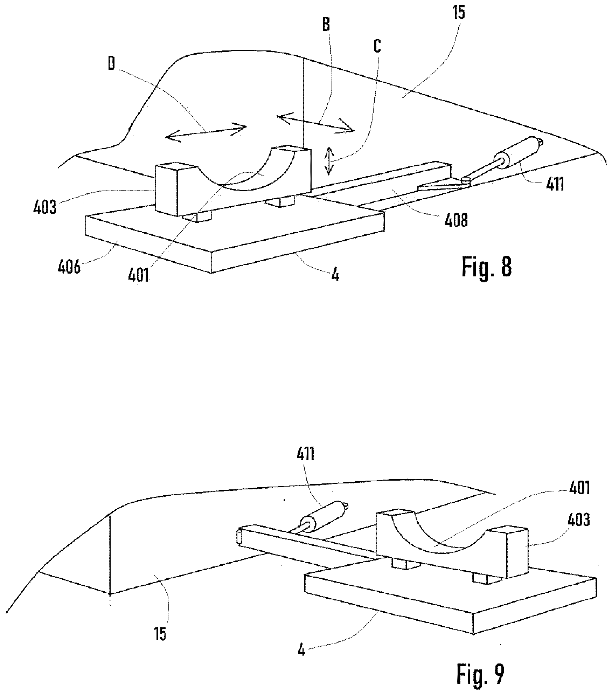

Reference is also made to fig. 8, showing a perspective view of an example of a blade guide device. For ease of the illustration, the contact guiding arrangement 402, and the mounting elements 404 which are arranged to reach up to and onto the nacelle roof, are not shown in fig. 8. It is also noted that in some embodiments, the blade guide may be provided without such a contact guiding arrangement 402, and mounting elements 404.

The method may comprise bringing, with the blade 11 and the blade guide device 4 in contact with each other, the blade into a mounting position in which it is fastened to the hub 18. For example, as exemplified in fig. 4 and fig. 7, a mounting arrangement for fastening the blade to the hub may comprise threaded pins 119 along the periphery of the blade root, adapted to engage holes 181 along a mounting flange 182 of the hub.

The step of bringing the blade into the mounting position may comprise moving the blade towards the hub 18 along the longitudinal direction of the blade. This movement may comprise moving, preferably with motion providing means, the blade contact device 403 towards the hub 18. As exemplified in fig. 8 with the double arrow B, the blade contact device may be moved in relation to the blade support device 406, towards and away from the hub. This movement may be provided by motion providing means, e.g. comprising an electric motor or a hydraulic actuator. In some embodiment, the blade contact device 403 may comprise a trolley arranged to move on the blade support device 406.

By the movement of the blade contact device 403, the blade may be moved towards the mounting position. Thereby, a crane boom of the lifting means 3 may be operated to follow the movement or drive the movement (if no motion providing means is provided on the blade guiding device). Alternatively, the crane boom may be stationary during the movement. As suggested above, this may result in the one or more wires 302 of the lifting means presenting an angle to the vertical direction.

The blade guide device may be moved transversely to the blade longitudinal direction. Thereby the blade may be accurately aligned with the hub. As exemplified in fig. 8 with the double arrow C, the blade contact device 403 may be moved vertically in relation to the blade support device 406.

As exemplified in fig. 8 with the double arrow D, the blade contact device 403 may be moved horizontally and transversely to the blade longitudinal direction. This movement may be relative to the blade support device 406. However, in some embodiments, the transversal and horizontal movement of the blade contact device 403 may be effected by movement of the blade support device 406. This may be accomplished for example by a telescopic movement of a horizontal connection element 408 of the blade guide device 4. The connection element 408 may connect the blade support device 406 with the nacelle, or with one or more further elements connected to the nacelle, such as the one or more mounting elements 404 exemplified in fig. 4.

For circumferential alignment of the blade threaded pins 119 to the hub mounting holes 181, exemplified in fig 4 and fig 6, an adjustment may be made by a blade pitch system of the wind turbine. In some embodiments, the blade contact device 403, exemplified in fig. 8, may be rotated around a vertical axis in relation to the blade support device 406. As suggested above, alternatively or in addition, the blade contact device 403 may be softer at a distance from a vertical plane including a centre axis of the blade root 111, than the blade contact device 403 is closer to said vertical plane. This may allow for a slight twisting of the blade root during the installation.

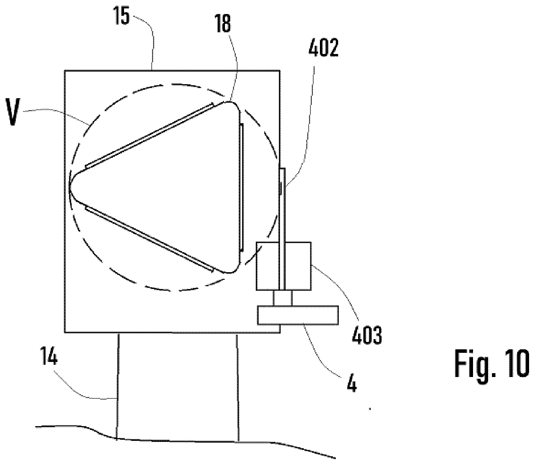

Reference is made also to fig. 9 and fig. 10. The blade guide device 4 may comprise moving means 411 for moving the blade guide device, from a blade contact position to a retracted position, exemplified in fig. 9. Thereby, the blade guide device may be moved away from the hub 18. As exemplified in fig. 10, in the blade contact position, the blade guide device 4 is at least partly located within a volume V which would be swept by the hub 18 while the hub rotates. As exemplified in fig. 9, in the retracted position, blade guide device 4 is moved away from the swept volume V. The moving means may comprise an actuator 411. The actuator may be a hydraulic actuator or an electric motor. In this example, the blade guide device is moved by a swing motion, e.g. of about 90 degrees, around a vertical axis. The movement from the blade contact position to the retracted position may be accomplished in a variety of manners, e.g. by a telescoping member, and/or by a swing motion in any suitable direction, e.g. downwards.

When the blade is installed, the hub may be rotated to install a further blade and the blade guide device may be moved back to enable the installation of the further blade. When use of the blade guide device 4 is completed, the blade guide device may be removed from the nacelle 15. Thereby, hoisting means 151, such as the hoisting means described with reference to fig. 3, may be used for moving the blade guide device down from the nacelle. As stated, more generally, the hoisting means 151 may be a crane or a winch, which is permanently or temporarily installed in or on the nacelle. In alternative embodiments, the lifting means 3 may be used to move the blade guiding device down from the nacelle.

In preferred embodiments, for a wind turbine installation process, the blade guide device 4 is mounted to the nacelle 15 before the nacelle with the mounted blade guide device is mounted to the tower 14, and the blade guide device is removed from the nacelle, using hoisting means 151 provided in or on the nacelle, or using the lifting means 3.

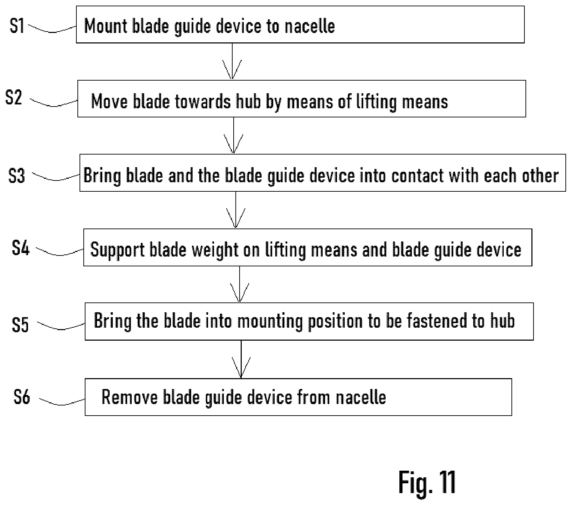

Reference is made to fig. 11 depicting steps in a method according to an embodiment of the invention, e.g. as exemplified above. A blade guide device 4 is mounted S1 to a wind turbine nacelle 15. Thereafter, a blade 11 is moved S2 towards a rotor hub 18 mounted to the nacelle 15 by means of lifting means 3. The blade 11 and the blade guide device 4 are brought S3 into contact with each other. Thereafter, the blade weight is supported S4 on the lifting means and the blade guide device. Thereafter, the blade is brought S5 into a mounting position to be fastened to hub. Thereafter, the blade guide device is removed S6 from the nacelle. The process may further comprise the optional step of assessing installation conditions prior to mounting the blade guide device to the nacelle.

Many alternatives to the examples described are possible and will occur to those skilled in the art without departing from the scope of the invention which is defined by the claims.

## Claims

1. A method for horizontal installation of a blade (11) of a horizontal axis wind turbine (1), the method comprising
- providing a nacelle (15) for the wind turbine, and a rotor hub (18) mounted to the nacelle,
- mounting a blade guide device (4) to the nacelle (15),
- providing a lifting means (3) configured to suspend a blade and lift the blade (11) to or from the hub (18),
- supporting the entire weight of the blade (11) with said lifting means (3),
- moving the blade (11) towards the hub (18) by means of the lifting means (3), while the entire weight of the blade is supported by the lifting means,
- bringing, while the weight of the blade (11) is supported by the lifting means (3), the blade and the blade guide device (4) into contact with each other, and
- bringing, with the blade (11) and the blade guide device (4) in contact with each other, the blade (11) into a mounting position in which it is fastened to the hub (18), wherein the blade (11) extends longitudinally between a blade root (111) and a blade tip (112), and the support of the blade by the lifting means (3) is done by means of an engagement device (301) of the lifting means, the engagement device engaging the blade in a region between the blade root and the blade tip, wherein a region of the contact of the blade guide device (4) with the blade is, compared to the region of the engagement of the engagement device, closer to the blade root,
- **characterised by**, after the blade (11) and the blade guide device (4) having been brought into contact with each other, supporting the weight of the blade by both the lifting means (3) and the blade guide device (4) comprising, after bringing the blade (11) and the blade guide device (4) into contact with each other, lowering the engagement device (301) and/or shifting the lifting point of the engagement device (301) towards the blade tip.

2. The method according to claim 1, wherein the support of the lifting means (3) is such that, while the weight of the blade (11) is supported by the lifting means (3) and the blade guide device (4), if the blade would be lifted away from the blade guide device (4), the blade root (111) would be lower in relation to the engagement device (301), compared to the location of the blade root in relation to the engagement device when the weight of the blade is supported by the lifting means and the blade guide device.

3. The method according to any one of claim 1-2, wherein, during the step of supporting the weight of the blade (11) with the lifting means (3), the engagement device (301) is suspended in one or more wires (302) of the lifting means, the method further comprising moving a connection (303) between the engagement device and the one or more wires, in a direction away from the blade root (111).

4. The method according to any one of the preceding claims, wherein the step of bringing the blade and the blade guide device (4) into contact with each other comprises bringing the blade and a blade contact device (403) of the blade guide device (4) into contact with each other, wherein the step of bringing the blade (11) into the mounting position comprises moving, preferably with motion providing means, the blade contact device (403) towards the hub (18).

5. The method according to any one of the preceding claims, wherein the blade (11) extends longitudinally between a blade root (111) and a blade tip (112), the method comprising moving, after bringing the blade and the blade guide device (4) into contact with each other, a blade contact device (403) of the blade guide device (4) transversely to the blade longitudinal direction.

6. The method according to any one of the preceding claims, comprising, during the step of bringing the blade (11) and the blade guide device (4) into contact with each other, guiding, by means of a contact guiding arrangement (402) of the blade guide device, the blade into contact with one or more blade contact surfaces (401) of the blade guide device.

7. The method according to any one of the preceding claims, comprising engaging, upon bringing the blade (11) and the blade guide device (4) into contact with each other, a locking device to further secure the blade to the blade guide device.

8. The method according to any one of the preceding claims, comprising, after fastening the blade (11) to the hub (18), moving the blade guide device (4), while mounted to the nacelle (15), away from the hub.

9. The method according to any one of the preceding claims, wherein the step of bringing the blade (11) and the blade guide device (4) into contact with each other is done after mounting the nacelle (15) on top of a tower (14) of the wind turbine (1).

10. The method according to claim 9, comprising, after fastening the blade (11) to the hub (18), dismounting the blade guide device (4) from the nacelle (15), and moving the blade guide device down from the nacelle by means of hoisting means (151) provided in or on the nacelle.

11. The method according to any one of the preceding claims, wherein the step of mounting the blade guide device (4) to the nacelle (15) is done before mounting the nacelle on top of a tower (14) of the wind turbine (1).

12. The method according to any one of the preceding claims, wherein the blade installation is done while the wind turbine is shut down after having operated to produce power to a grid.

## Patentansprüche

1. Verfahren zur horizontalen Installation eines Blatts (11) einer Windkraftanlage mit horizontaler Achse (1), wobei das Verfahren umfasst
- Bereitstellen einer Gondel (15) für die Windkraftanlage und einer Rotornabe (18), die an der Gondel montiert ist,
- Montieren einer Blattführungsvorrichtung (4) an die Gondel (15),
- Bereitstellen eines Auftriebsmittels (3), das konfiguriert ist, um ein Blatt zu halten und das Blatt (11) zu oder von der Nabe (18) anzuheben,
- Stützen des gesamten Gewichts des Blatts (11) mit dem Auftriebsmittel (3),
- Bewegen des Blatts (11) zur Nabe (18) hin mittels des Auftriebsmittels (3), während das gesamte Gewicht des Blatts vom Auftriebsmittel gestützt wird,
- während das Gewicht des Blatts (11) vom Auftriebsmittel (3) gestützt wird, Bringen des Blatts und der Blattführungsvorrichtung (4) in Kontakt miteinander, und
- mit dem Blatt (11) und der Blattführungsvorrichtung (4) in Kontakt miteinander, Bringen des Blatts (11) in eine Montageposition, in der es an der Nabe (18) befestigt ist, wobei sich das Blatt (11) längslaufend zwischen einer Blattwurzel (111) und einer Blattspitze (112) erstreckt und die Stütze des Blatts durch das Auftriebsmittel (3) mittels einer Eingriffsvorrichtung (301) des Auftriebsmittels durchgeführt wird, wobei die Eingriffsvorrichtung in das Blatt in einen Bereich zwischen der Blattwurzel und der Blattspitze eingreift, wobei ein Bereich des Kontakts der Blattführungsvorrichtung (4) mit dem Blatt verglichen mit dem Bereich des Eingriffs der Eingriffsvorrichtung näher an der Blattwurzel ist,
- **dadurch gekennzeichnet, dass**, nachdem das Blatt (11) und die Blattführungsvorrichtung (4) miteinander in Kontakt gebracht wurde, das Stützen des Gewichts des Blatts sowohl durch das Auftriebsmittel (3) als auch die Blattführungsvorrichtung (4) umfasst, die Eingriffsvorrichtung (301) abzusenken und/oder den Auftriebspunkt der Eingriffsvorrichtung (301) zur Blattspitze hin zu verschieben, nachdem das Blatt (11) und die Blattführungsvorrichtung (4) miteinander in Kontakt gebracht wurden.

2. Verfahren nach Anspruch 1, wobei die Stütze des Auftriebsmittels (3) derart ist, dass, während das Gewicht des Blatts (11) vom Auftriebsmittel (3) und der Blattführungsvorrichtung (4) gestützt wird, falls das Blatt von der Blattführungsvorrichtung (4) weg angehoben würde, die Blattwurzel (111) in Bezug auf die Eingriffsvorrichtung (301) niedriger wäre, verglichen mit der Stelle der Blattwurzel in Bezug auf die Eingriffsvorrichtung, wenn das Gewicht des Blatts vom Auftriebsmittel und der Blattführungsvorrichtung gestützt wird.

3. Verfahren nach einem der Ansprüche 1-2, wobei während des Schritts des Stützens des Gewichts des Blatts (11) mit dem Auftriebsmittel (3) die Eingriffsvorrichtung (301) in einem oder mehreren Drähten (302) des Auftriebsmittels getragen wird, wobei das Verfahren weiter umfasst, eine Verbindung (303) zwischen der Eingriffsvorrichtung und dem einen oder den mehreren Drähten in einer Richtung weg von der Blattwurzel (111) zu bewegen.

4. Verfahren nach einem der vorstehenden Ansprüche, wobei der Schritt des Bringens des Blatts und der Blattführungsvorrichtung (4) in Kontakt miteinander umfasst, das Blatt und eine Blattkontaktvorrichtung (403) der Blattführungsvorrichtung (4) miteinander in Kontakt zu bringen, wobei der Schritt des Bringens des Blatts (11) in die Montageposition umfasst, die Blattkontaktvorrichtung (403) vorzugsweise mit Bewegungsbereitstellungsmitteln zur Nabe (18) hin zu bewegen.

5. Verfahren nach einem der vorstehenden Ansprüche, wobei sich das Blatt (11) längslaufend zwischen einer Blattwurzel (111) und einer Blattspitze (112) erstreckt, wobei das Verfahren umfasst, nach dem Bringen des Blatts und der Blattführungsvorrichtung (4) in Kontakt miteinander, eine Blattkontaktvorrichtung (403) der Blattführungsvorrichtung (4) quer zur Blattlängsrichtung zu bewegen.

6. Verfahren nach einem der vorstehenden Ansprüche, umfassend, während des Schritts des Bringens des Blatts (11) und der Blattführungsvorrichtung (4) in Kontakt miteinander, das Blatt mittels einer Kontaktführungsanordnung (402) der Blattführungsvorrichtung in Kontakt mit einer oder mehreren Blattkontaktoberflächen (401) der Blattführungsvorrichtung zu führen.

7. Verfahren nach einem der vorstehenden Ansprüche, umfassend, nach Bringen des Blatts (11) und der Blattführungsvorrichtung (4) in Kontakt miteinander, in eine Verriegelungsvorrichtung einzugreifen, um das Blatt weiter an der Blattführungsvorrichtung zu sichern.

8. Verfahren nach einem der vorstehenden Ansprüche, umfassend, nach dem Befestigen des Blatts (11) an der Nabe (18), die Blattführungsvorrichtung (4), während sie an der Gondel (15) montiert ist, weg von der Nabe zu bewegen.

9. Verfahren nach einem der vorstehenden Ansprüche, wobei der Schritt des Bringens des Blatts (11) und der Blattführungsvorrichtung (4) in Kontakt miteinander nach dem Montieren der Gondel (15) an der Oberseite eines Turms (14) der Windkraftanlage (1) durchgeführt wird.

10. Verfahren nach Anspruch 9, umfassend, nach dem Befestigen des Blatts (11) an der Nabe (18), die Blattführungsvorrichtung (4) von der Gondel (15) zu lösen und die Blattführungsvorrichtung mittels Hebemitteln (151), die in oder an der Gondel bereitgestellt sind, von der Gondel herunter zu bewegen.

11. Verfahren nach einem der vorstehenden Ansprüche, wobei der Schritt des Montierens der Blattführungsvorrichtung (4) an der Gondel (15) vor dem Montieren der Gondel an der Oberseite eines Turms (14) der Windkraftanlage (1) durchgeführt wird.

12. Verfahren nach einem der vorstehenden Ansprüche, wobei die Blattinstallation durchgeführt wird, während die Windkraftanlage abgeschaltet ist, nachdem sie betrieben wurde, um Leistung für ein Netz zu produzieren.

## Revendications

1. Procédé d'installation horizontale d'une pale (11) d'une éolienne à axe horizontal (1), le procédé comprenant les étapes consistant à
- fournir une nacelle (15) pour l'éolienne, et un moyeu de rotor (18) monté sur la nacelle,
- monter un dispositif de guidance de pale (4) sur la nacelle (15),
- fournir un moyen de levage (3) configuré pour suspendre une pale et lever la pale (11) vers ou depuis le moyeu (18),
- supporter le poids total de la pale (11) avec ledit moyen de levage (3),
- déplacer la pale (11) vers le moyeu (18) au moyen du moyen de levage (3), tandis que le poids total de la pale est supporté par le moyen de levage,
- mettre, tandis que le poids de la pale (11) est supporté par le moyen de levage (3), la pale et le dispositif de guidance de pale (4) en contact l'un avec l'autre, et
- mettre, avec la pale (11) et le dispositif de guidance de pale (4) en contact l'un avec l'autre, la pale (11) dans une position de montage dans laquelle elle est fixée au moyeu (18), dans lequel la pale (11) s'étend longitudinalement entre un pied de pale (111) et une extrémité de pale (112), et le support de la pale par le moyen de levage (3) est réalisé au moyen d'un dispositif d'engagement (301) du moyen de levage, le dispositif d'engagement engageant la pale dans une région entre le pied de pale et l'extrémité de pale, dans lequel une région du contact du dispositif de guidance de pale (4) avec la pale est, en comparaison avec la région de l'engagement du dispositif d'engagement, plus proche du pied de pale,
- **caractérisé par**, après que la pale (11) et le dispositif de guidance de pale (4) ont été mis en contact l'un avec l'autre, l'étape consistant à supporter le poids de la pale par à la fois le moyen de levage (3) et le dispositif de guidance de pale (4) comprenant, après avoir mis la pale (11) et le dispositif de guidance de pale (4) en contact l'un avec l'autre, l'étape consistant à abaisser le dispositif d'engagement (301) et/ou modifier le point de levage du dispositif d'engagement (301) vers l'extrémité de pale.

2. Procédé selon la revendication 1, dans lequel le support du moyen de levage (3) est tel que, tandis que le poids de la pale (11) est supporté par le moyen de levage (3) et le dispositif de guidance de pale (4), si la pale était levée à distance du dispositif de guidance de pale (4), le pied de pale (111) serait plus bas par rapport au dispositif d'engagement (301), en comparaison avec l'emplacement du pied de pale par rapport au dispositif d'engagement lorsque le poids de la pale est supporté par le moyen de levage et le dispositif de guidance de pale.

3. Procédé selon l'une quelconque des revendications 1-2, dans lequel, durant l'étape consistant à supporter le poids de la pale (11) avec le moyen de levage (3), le dispositif d'engagement (301) est suspendu dans un ou plusieurs fils (302) du moyen de levage, le procédé comprenant en outre l'étape consistant à déplacer un raccordement (303) entre le dispositif d'engagement et les un ou plusieurs fils, dans une direction à distance du pied de pale (111).

4. Procédé selon l'une quelconque des revendications précédentes, dans lequel l'étape consistant à mettre la pale et le dispositif de guidance de pale (4) en contact l'un avec l'autre comprend l'étape consistant à mettre la pale et un dispositif de contact de pale (403) du dispositif de guidance de pale (4) en contact l'un avec l'autre, dans lequel l'étape consistant à mettre la pale (11) dans la position de montage comprend l'étape consistant à déplacer, de préférence avec un moyen de fourniture de mouvement, le dispositif de contact de pale (403) vers le moyeu (18).

5. Procédé selon l'une quelconque des revendications précédentes, dans lequel la pale (11) s'étend longitudinalement entre un pied de pale (111) et une extrémité de pale (112), le procédé comprenant l'étape consistant à déplacer, après avoir mis la pale et le dispositif de guidance de pale (4) en contact l'un avec l'autre, un dispositif de contact de pale (403) du dispositif de guidance de pale (4) transversalement par rapport à la direction longitudinale de pale.

6. Procédé selon l'une quelconque des revendications précédentes, comprenant, durant l'étape consistant à mettre la pale (11) et le dispositif de guidance de pale (4) en contact l'un avec l'autre, l'étape consistant à guider, au moyen d'un agencement de guidance de contact (402) du dispositif de guidance de pale, la pale en contact avec une ou plusieurs surfaces de contact de pale (401) du dispositif de guidance de pale.

7. Procédé selon l'une quelconque des revendications précédentes, comprenant l'étape consistant à engager, lors de la mise en contact de la pale (11) et du dispositif de guidance de pale (4) l'un avec l'autre, un dispositif de verrouillage pour sécuriser davantage la pale sur le dispositif de guidance de pale.

8. Procédé selon l'une quelconque des revendications précédentes, comprenant, après avoir fixé la pale (11) au moyeu (18), l'étape consistant à déplacer le dispositif de guidance de pale (4), tout en étant monté sur la nacelle (15), à distance du moyeu.

9. Procédé selon l'une quelconque des revendications précédentes, dans lequel l'étape consistant à mettre la pale (11) et le dispositif de guidance de pale (4) en contact l'un avec l'autre est réalisée après avoir monté la nacelle (15) au-dessus d'une tour (14) de l'éolienne (1).

10. Procédé selon la revendication 9, comprenant, après avoir fixé la pale (11) au moyeu (18), l'étape consistant à démonter le dispositif de guidance de pale (4) de la nacelle (15), et à déplacer le dispositif de guidance de pale vers le bas depuis la nacelle au moyen d'un moyen de treuil (151) fourni dans ou sur la nacelle.

11. Procédé selon l'une quelconque des revendications précédentes, dans lequel l'étape consistant à monter le dispositif de guidance de pale (4) sur la nacelle (15) est réalisée avant de monter la nacelle au-dessus d'une tour (14) de l'éolienne (1).

12. Procédé selon l'une quelconque des revendications précédentes, dans lequel l'installation de pale est réalisée tandis que l'éolienne est éteinte après avoir fonctionné pour produire de l'énergie sur un réseau.
